# EUROPEAN PATENT APPLICATION

(11) **EP 1 416 653 A2**
(43) Date of publication of application: **06.05.2004**
(21) Application number: 03256873.5
(22) Date of filing: 30.10.2003
(51) Int. Cl.: H04B 10/17

(54) **Optical transmission system comprising a plurality of optical amplification relay sections**

(30) Priority: 31.10.2002 JP 2002317087
(71) Applicant: NEC CORPORATION, Tokyo (JP)
(72) Inventor: Tanaka, Akihiro, Tokyo (JP)
(74) Representative: Robson, Aidan John

(57) **Abstract**

An optical transmission system 10 comprising Raman amplification relay sections 11 to 1N and an EDFA relay section 21, wherein the single EDFA relay section 21 is disposed in a subsequent stage of the N Raman amplification relay sections 11 to 1N. A Raman amplifier 115 operates at an input signal level where a uniform pumping gain is achieved, while an EDFA 217 operates at an input signal level where a constant output signal level is achieved. Therefore, even if a signal level of a signal having passed through the N Raman amplification relay sections 11 to 1N deviates significantly from a setting value, the EDFA relay section 21 in the subsequent stage can control the output signal level to return to the setting level.

## Description

### BACKGROUND OF THE INVENTION

### 1. Field of the Invention

The present invention relates to an optical transmission systems comprising a plurality of optical amplification relay sections connected in series.

### 2. Description of Related Art

In recent years, data communications represented by the Internet are showing a rapidly increasing demand. Along with it, research and development for achieving ultra long haul and ultra high capacity communications are being vigorously pursued. To achieve this type of optical networks, an optical amplifier, which is a component of an optical transmission line, is required to reduce noise, loss of an optical fiber, and nonlinear optical effects in the optical fiber.

To resolve these problems and to achieve next-generation 40 Gb/s ultra high speed optical transmission systems, a Raman effects optical fiber amplifier (hereinafter, referred to as Raman amplifier) has been a focus of attention. The Raman amplifier sends a pumping light to an optical fiber, which is a transmission line, to use the optical fiber as both of a transmission line and an amplifier. Therefore, the Raman amplifier is possible to increase the minimum loss level on the transmission line. Thereby, deterioration of a signal-to-noise ratio (SN ratio) can be inhibited.

An actual optical transmission line preferably keeps its transmission quality without deterioration thereof caused by a change with time (an increase of optical fiber loss, an optical amplifier failure, etc.). The Raman amplifier, however, permits an extremely high input level at which a signal light gain is saturated and therefore it is almost always running with a desaturated gain at normal input levels of the optical communication system. Accordingly, it has a problem of being susceptible to deterioration with time or the like. More specifically, if an input signal level is low, an output signal level is low, too. If the input signal level is high, the output signal level is high, too. Therefore, a fluctuation of the input signal level is directly reflected on the output signal level.

### SUMMARY OF THE INVENTION

It is an object of the present invention to provide optical transmission systems capable of keeping stable qualities from deteriorating with time as well as utilizing advantages of the Raman amplifier.

According to an aspect of the present invention, there is provided an optical transmission system comprising a plurality of optical amplification relay sections connected in series, the optical amplification relay sections comprising a plurality of first optical amplification relay sections with Raman amplifiers and a single second optical amplification relay section with an optical fiber amplifier in a subsequent stage of the first optical amplification relay sections. The optical amplification relay section is defined as a section comprising a pair of optical amplifiers and a transmission line.

According to another aspect of the present invention, there is provided an optical transmission system comprising a plurality of optical amplification relay sections connected in series, the optical amplification relay sections comprising N (N is 2 or a greater integer) first optical amplification relay sections with Raman amplifiers and a single second optical amplification relay section with an optical fiber amplifier in a subsequent stage of the first optical amplification relay sections. Therefore, the single second optical amplification relay section is disposed in the subsequent stage of the N first optical amplification relay sections.

As set forth in the above, the Raman amplifier operates at an input signal level where a pumping gain is constant. Therefore, if the input signal level is low, the output signal level is low, too, while if the input signal level is high, the output signal level is high, too. In other words, the output signal of the Raman amplifier reflects a fluctuation of the input signal level directly. Thereby, a signal level having passed through the plurality of or N first optical amplification relay sections reflects accumulated errors in each Raman amplifier or a level fluctuation that has occurred halfway. Therefore, it is likely to cause a value to depart significantly from a preset value. Therefore, the single second optical amplification relay section is disposed in the subsequent stage of the plurality of or N first optical amplification relay sections. The optical fiber amplifier of the second optical amplification relay section operates so that the output signal level becomes constant. Therefore, the output signal level returns to the constant value, namely, the setting value, independently of whether the input signal level is low or high.

### BRIEF DESCRIPTION OF THE DRAWINGS

The above and other objects, features and advantages of the present invention will become more apparent from the following detailed description when taken in conjunction with the accompanying drawings wherein:
Fig. 1 is a schematic showing an embodiment of an optical transmission system according to the present invention: (a) is a block diagram showing an outline, (b) is a schematic of a Raman optical amplifier, and (c) is a schematic of an optical fiber amplifier;
Fig. 2 is a graph showing an operational comparison of the Raman amplifier and the optical fiber amplifier (a control of pumping light power uniformity): (a) shows pumping gains of the respective amplifiers at input signal levels and (b) shows output signal levels of the respective amplifiers at input signal levels;
Fig. 3 is a graph showing power variation at respective transmission distances in the optical transmission system in Fig. 1: (a) shows a normal operation, (b) shows an operation in which a loss increase occurs at an X point, (c) shows an operation in which a net gain of the Raman amplifier slightly gets higher than 0dB, and (d) shows an operation in which a net gain of the Raman amplifier slightly gets lower than 0dB;
Fig. 4 is a diagram related to a simulation of the optical transmission system in Fig. 1: (a) is a schematic showing the optical transmission system for use in the simulation and (b) is a diagram showing various conditions for use in the simulation;
Fig. 5 is a graph showing a result of the simulation in Fig. 4;
Fig. 6 is a schematic showing an example of the Raman amplifier in Fig. 1: (a) shows a first example, (b) shows a second example, and (c) shows a third example; and
Fig. 7 is an explanatory diagram showing an operation of reducing an amplified spontaneous emission (ASE) noise outside a signal wavelength range in the optical transmission system in Fig. 1: (a) is a block diagram of the optical transmission system, (b) is a spectral diagram of a signal at the a point in (a), (c) is a spectral diagram of a signal at the b point in (a), and (d) is a spectral diagram of the c point in (a).

### DETAILED DESCRIPTION OF THE PREFERRED EMBODIMENTS

A basic configuration of an optical transmission systems according to the present invention and its principle of operation will now be described hereinafter.

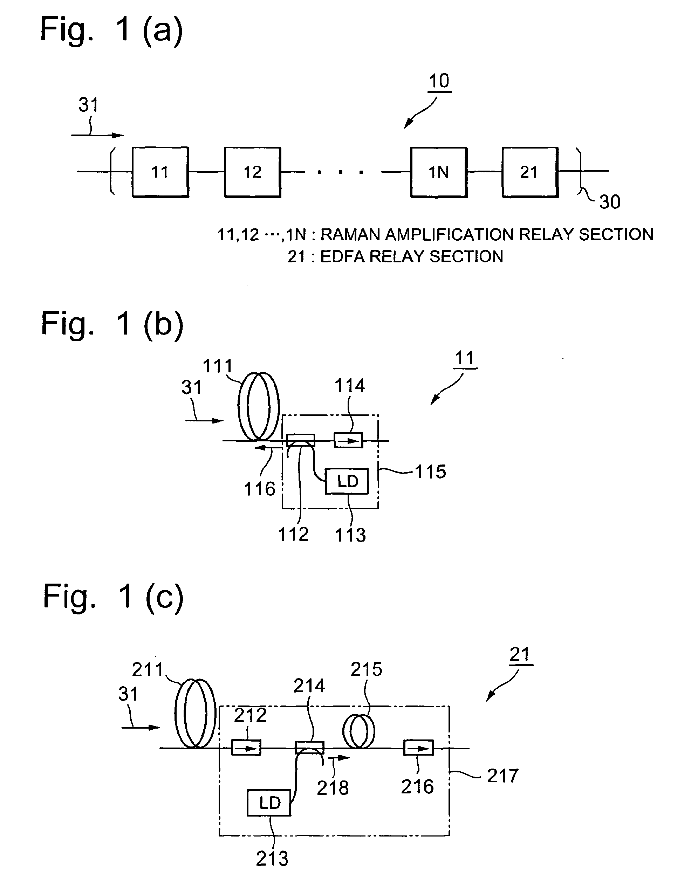

Referring to Fig. 1, there is shown an embodiment of an optical transmission system according to the present invention: Fig. 1(a) is a block diagram showing an outline, Fig. 1(b) is a schematic of a Raman optical fiber amplifier, and Fig. 1(c) is a schematic of an optical fiber amplifier. The preferred embodiment will now be described hereinafter by referring to these drawings. The description will be made by giving an example of an Erbium-doped optical fiber amplifier (hereinafter, referred to as EDFA) as the optical fiber amplifier. Erbium (Er) has a transition for a wavelength 1.55 µm region that is the minimum transmission loss in a normal single mode optical fiber. Therefore, it is suitable for amplifying a signal light transmitted at a low loss particularly in a long-distance transmission.

Hereinafter, the optical relay section with the Raman amplifier is referred to as Raman amplification relay section and the optical relay section with the EDFA doped with Erbium as rare earth is referred to as EDFA relay section. The optical transmission system 10 according to this embodiment comprises Raman amplification relay sections 11 to 1N and an EDFA relay section 21. Assuming that N is 2 or a greater integer, the single EDFA relay section 21 is disposed in the subsequent stage of the N Raman amplification relay sections 11 to 1N.

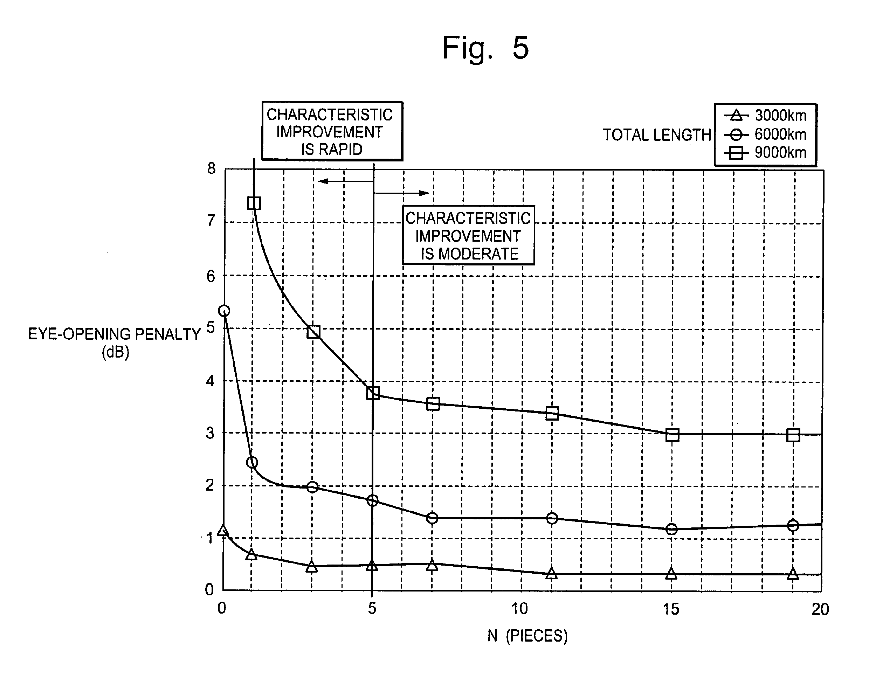

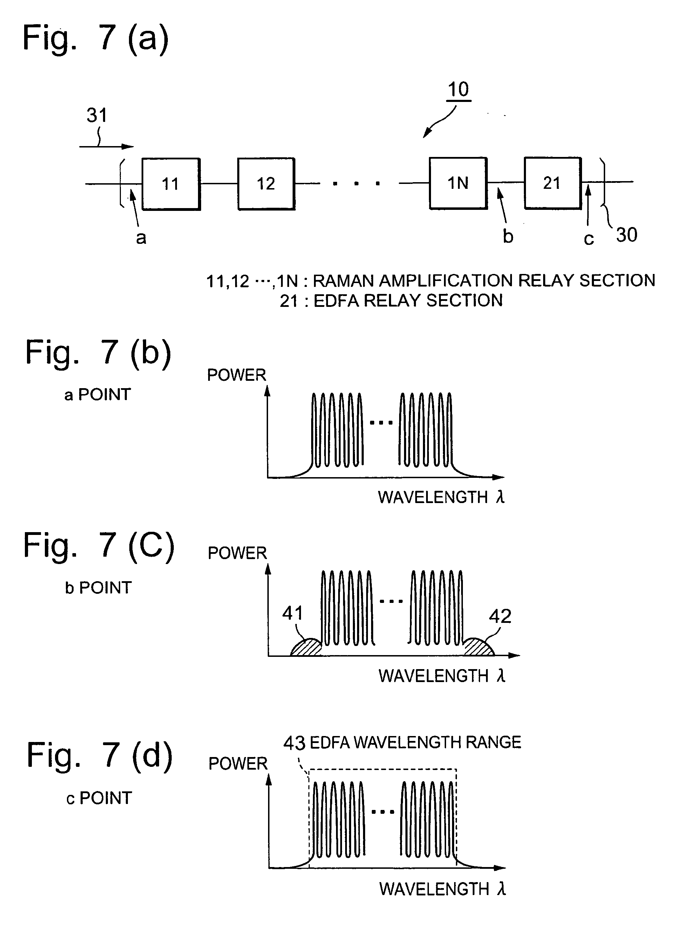

In the optical transmission system 10, the total length of the optical transmission line is formed by a repetition of a basic block unit 30 comprising the N Raman amplification relay sections 11 to 1N and the EDFA relay section 21. This structure enables the optical transmission line to be suitable for the ultra long haul optical transmission system. Note that, however, N for the repeated basic block unit 30 is not necessarily fixed. A composition ratio of the Raman amplification relay sections 11 to 1N to the EDFA relay section 21 is preferably 3 or greater to 1, more preferably 4 or greater to 1, and most preferably 5 or greater to 1. In other words, N is preferably 3 or greater, more preferably 4 or greater, and most preferably 5 or greater. By way of example, an arrangement of a single rare-earth-elements-doped optical fiber amplifier (hereinafter, referred to as an optical fiber amplifier) combined with only one Raman amplifier is disclosed in the following patent document 1:
Patent document 1: Japanese Unexamined Patent Publication (Kokai) No. Hei 11-84440 (Fig. 7 and Fig. 5).

As N is smaller, however, the number of the Raman amplification relay sections 11 to 1N decreases, thereby a waveform distortion or the like is caused by the EDFA.

In addition, note that the technology disclosed in the patent document 1 is for enabling a broadband amplification by combining the Raman amplifier with the optical fiber amplifier and not for compensating for power variation.

Since the respective Raman amplification relay sections 11 to 1N have the same configuration, the Raman amplification relay section 11 will be described here. The Raman amplification relay section 11 comprises an optical fiber 111 and a Raman amplifier 115. The Raman amplifier 115 comprises a wavelength division multiplexing (WDM) coupler 112, a pumping light source 113, and an optical isolator 114. The optical fiber 111 is a combined fiber made by combining a positive dispersion fiber having a positive wavelength dispersion and a dispersion slope with a negative dispersion fiber having a negative wavelength dispersion and a dispersion slope. Instead of the combined fiber, a normal single mode fiber or a dispersion shifted fiber (DSF) can be used, too. The pumping light source 113 uses 4 wavelengths (for example, 1,424 nm, 1,437 nm, 1,449 nm, and 1,465 nm) of semiconductor lasers in a bundle to secure gain flatness. A pumping light 116 output from the pumping light source 113 is emitted in a reverse direction to the signal light 31. As the WDM coupler 112, for example, a fused type WDM coupler is used. The optical isolator 114 having a return loss more than or equal to 40 dB is used. Power of the pumping light 116 is feedback-controlled so as to be constantly uniform. In this manner, the pumping gain of the Raman amplifier is controlled so as to be constant. While a counter-propagating pumping type is described in this embodiment, a co-propagating pumping type or a co-propagating and counter-propagating pumping type can also be used. Since a general operation of the Raman amplifier 115 is already known, the description will be omitted here.

The EDFA relay section 21 comprises an optical fiber 211 and an EDFA 217. The EDFA 217 comprises optical isolators 212 and 216, a pumping light source 213, a WDM coupler 214, and an amplification optical fiber 215. The optical fiber 211 to be used is the same as, for example, the optical fiber 111. A pumping light 218 output from the pumping light source 213 is emitted in the same direction as of the signal light 31. The amplification optical fiber 215 is an Erbium-doped optical fiber (EDF). The pumping light 218 is controlled so as to maintain its output power uniformly. The power of the pumping light 218 may be feedback-controlled so as to be constantly uniform. In addition, while the co-propagating pumping type is described in this embodiment, a counter-propagating pumping type or a co-propagating and counter-propagating pumping type can be used, too. A general operation of the EDFA 217 is already known and therefore the description will be omitted here.

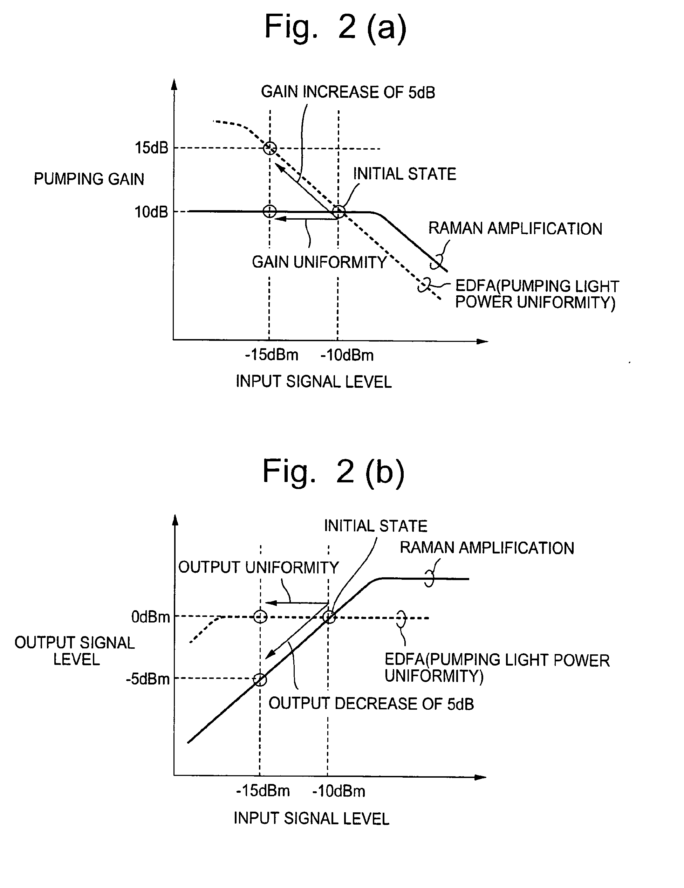

Referring to Fig. 2, there is shown a graph of an operational comparison of the Raman amplifier in Fig. 1 and the EDFA (a control of pumping light power uniformity). Fig. 2(a) shows pumping gains of the respective amplifiers at input signal levels. Fig. 2(b) shows output signal levels of the respective amplifiers at input signal levels. In Fig. 2, the operations of the Raman amplifier and the EDFA are indicated by a solid line and a dashed line, respectively. Hereinafter, they are described by referring to Fig. 1 and Fig. 2.

In Fig. 2(a), an abscissa axis represents input signal levels, while an ordinate axis represents pumping gains of the respective amplifiers. In the input signal levels on the abscissa axis, a value of the Raman amplifier 115 equals a value obtained by subtracting a loss of the optical transmission line from the fiber input signal level. In the pumping gains on the ordinate axis, a value of the Raman amplifier 115 equals a value obtained by subtracting a loss of the optical transmission line from a net gain. In the Raman amplifier 115, a loss and a gain occur simultaneously on the optical transmission line, thereby requiring the above definition.

In Fig. 2(b), the abscissa axis represents input signal levels, while the ordinate axis represents output signal levels of the respective amplifiers. It shows an operating condition with a 10dB pumping gain (Output signal level from the amplifier: 0 dBm) where the input signal level is -10 dBm assuming a 10dB loss of the optical transmission line. Under these operating conditions, the Raman amplifier 115 operates with an almost uniform gain, while the EDFA 217 for the control of pumping light power uniformity operates with a uniform output signal level.

In this connection, consider that the input signal level has decreased by 5 dB. The EDFA 217 for the control of pumping light power uniformity shows an increase of the pumping gain together with the decrease of the input signal level (Fig. 2(a)). As a result, the output signal level gets constant (Fig. 2(b)).

The Raman amplifier 115, however, shows a uniform gain and keeps 10 dB (Fig. 2(a)). As a result, the output signal level decreases to -5 dBm (Fig. 2(b)). It indicates that, if a level fluctuation such as a loss increase occurs in the optical transmission line, the output signal level is corrected to the initial setting level in the EDFA relay section 21 and the output signal level varies according to the fluctuation in the Raman amplification relay sections 11 to 1N.

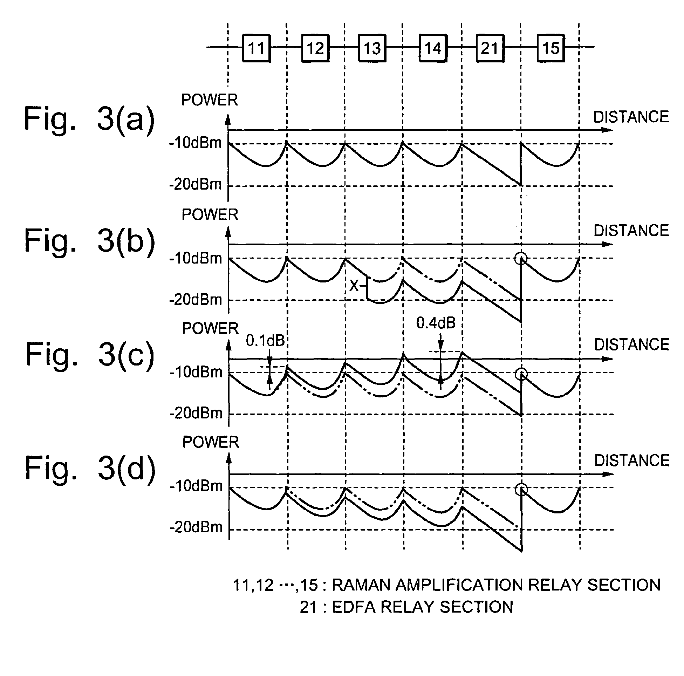

Referring to Fig. 3, there is shown a graph of power variation at respective transmission distances in the optical transmission system according to the present invention. In this embodiment, there is given an example of a case where the composition ratio of the Raman amplification relay sections to the EDFA relay section 21 is 4 to 1. Hereinafter, the embodiment is described by referring to Fig. 1 to Fig. 3.

It is assumed that each section input signal level is -10 dBm, a loss in the transmission line per section is 10 dB, and a pumping gain in each section is 10 dB. Fig. 3(a) shows a normal operation. The Raman amplifier 115 outputs the pumping light 116 in the reverse direction to the signal light 31 to amplify the light with the optical fiber 111 that is the optical transmission line. Thereby, the signal levels in the Raman amplification relay sections 11 to 14 and 15 are gradually attenuated according to the distance, gradually recover upon reaching the minimum value, and return to the initial level just before each Raman amplifier 115. On the other hand, the signal level in the EDFA relay section 21 is gradually attenuated according to the distance and sharply returns to the initial level just behind the EDFA 217 upon reaching the minimum value. It is because, in the case of the EDFA 217, the pumping light 218 is output to the amplification optical fiber 215 and the light is amplified only in the EDFA 217.

Fig. 3(b) shows an operation in which a loss increase occurs at an X point. The light is transmitted at low signal levels from the X point up to an output end of the EDFA relay section 21. With passing through the EDFA relay section 21, however, the signal level is returned to a predetermined signal level (-10 dBm).

In addition, also when the net gain obtained by subtracting a loss of the optical transmission line from a gain of the optical amplification is slightly higher or lower than 0 dB in the Raman amplification relay sections 11 to 14, the deviation can be reset with the EDFA relay section 21. For example, as shown in Fig. 3(c), consider that the net gain in the Raman amplification relay sections 11 to 14 is +0.1 dB. The transmission signal power is +0.4 dB higher than the setting value (-10 dBm) after the transmission of four Raman amplification relay sections 11 to 14. By disposing the EDFA relay section 21 in the subsequent stage, however, the output signal level can be returned to the setting value. Furthermore, as shown in Fig. 3(d), the same is true in the case where the net gain of the Raman amplification relay sections 11 to 14 is slightly lower than 0 dB.

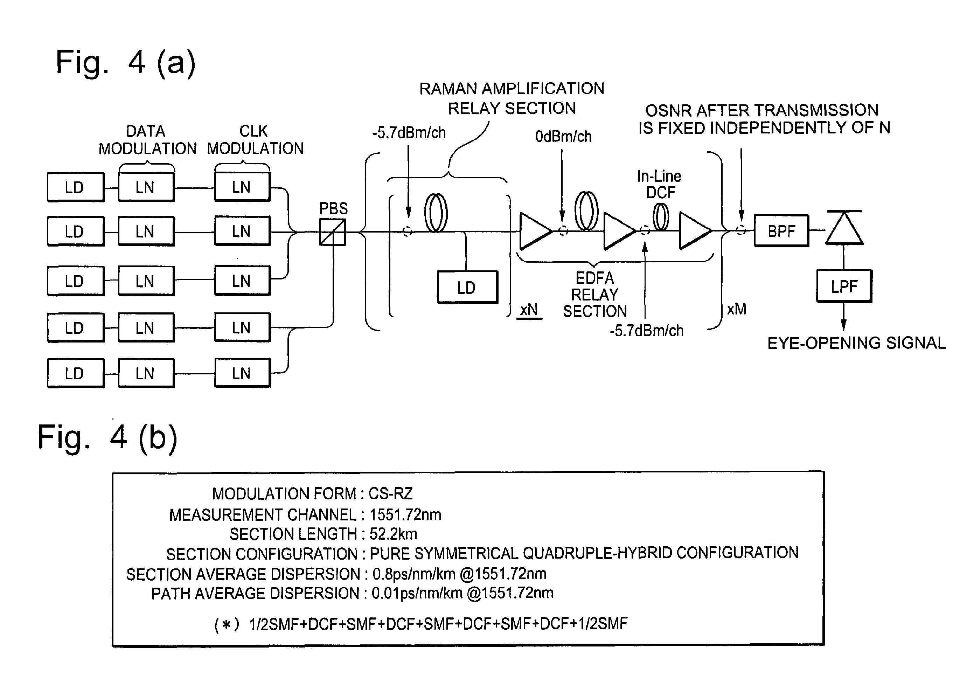

Fig. 4 and Fig. 5 are related to a simulation in the optical transmission system shown in Fig. 1. Fig. 4(a) is a schematic showing the optical transmission system for use in the simulation and Fig. 4(b) is a diagram showing various conditions for use in the simulation. Fig. 5 is a graph showing a result of the simulation. Hereinafter, the embodiment is described by referring to these drawings.

As shown in Fig. 4(a), a basic block unit comprises N Raman amplification relay sections and a single EDFA relay section disposed in a subsequent stage of the Raman amplification relay sections. The optical transmission system for use in the simulation is formed by repeating the basic block unit M times. In the optical transmission system shown in Fig. 4(a), the simulation has been performed under the conditions shown in Fig. 4(b).

Main abbreviations shown in Fig. 4 are then described here: LN (LiNbO₃ waveguide-type optical modulator), PBS (polarization beam splitter), DCF (dispersion compensation fiber), OSNR (optical signal to noise ratio), BPF (band pass filter), LPF (low pass filter), and SMF (single mode optical fiber).

Deterioration of an optical signal includes deterioration caused by noise added by an optical amplifier and deterioration caused by nonlinear optical effects that occurs during transmission. The former can be calculated relatively easily, while the latter need be quantified with an actual experiment or a simulation. Therefore, the latter deterioration has been quantified with a simulation under the condition of a fixed total amount of noise (OSNR fixed) that occurs in the optical amplifier. A result of the simulation is shown in Fig. 5.

The abscissa axis in Fig. 5 represents the number N of the Raman amplification relay sections to the single EDFA relay section. N=0 indicates that only the EDFA relay section exists. The ordinate axis in Fig. 5 represents an eye-opening penalty. An aperture between a mark and a space at an identification time is referred to as eye opening. As the eye opening increases, an allowance for noise grows. An existence of a waveform distortion makes the eye opening narrow, thereby increasing received light power for acquiring a necessary bit error rate (BER). The eye-opening penalty is obtained by subtracting an eye opening at the receiving end from an eye opening at the transmission in dB. In other words, as the eye-opening penalty increases, the waveform distortion grows.

If the number of the Raman amplification relay sections decreases relative to the EDFA relay section, the eye-opening penalty increases. The reason for it is as follows. The Raman amplifier emits pumping light to the transmission line and amplifies it. Therefore, as apparent from Fig. 3, loss occurs simultaneously with the amplification on the transmission line, thus relatively increasing the minimum loss level. On the other hand, as for the EDFA, only loss occurs on the transmission line, thus causing the minimum loss level just before the amplification to be low. There is no big difference between them in noise levels. Therefore, the EDFA having the lower minimum loss level has an OSNR more deteriorated than that of the Raman amplifier. As noise is amplified together with a signal light in each amplifier, the signal light is amplified in a deteriorated OSNR condition in the EDFA consequently. Therefore, as the ratio of the EDFA to the Raman amplifiers increases, the OSNR deteriorates, by which the eye-opening penalty increases consequently.

On the other hand, it will now be considered that the minimum loss level in the EDFA relay section is controlled to be the same as in the Raman amplification relay section to prevent the above. To achieve it, the output level of the EDFA need be higher than that of the Raman amplifier. An increase of signal light power in the optical transmission line, however, causes another problem of easily causing nonlinear optical effects. Particularly, in the case of a high-speed transmission of 40 Gb/s, it causes SPM-GVD that is a synergistic action of an accumulated dispersion and the nonlinear optical effects. It deteriorates the transmission waveform significantly, thus increasing the eye-opening penalty consequently.

Therefore, in both cases, the eye-opening penalty of the EDFA relay section easily gets higher than that of the Raman amplification relay section.

Therefore, as apparent from the graph of Fig. 5, N is preferably 3 or greater, more preferably 4 or greater, most preferably 5 or greater.

When N is smaller than 5, as the total length is greater, the eye-opening penalty sharply grows. It is because the greater total length causes the deterioration of the OSNR to be more easily accumulated.

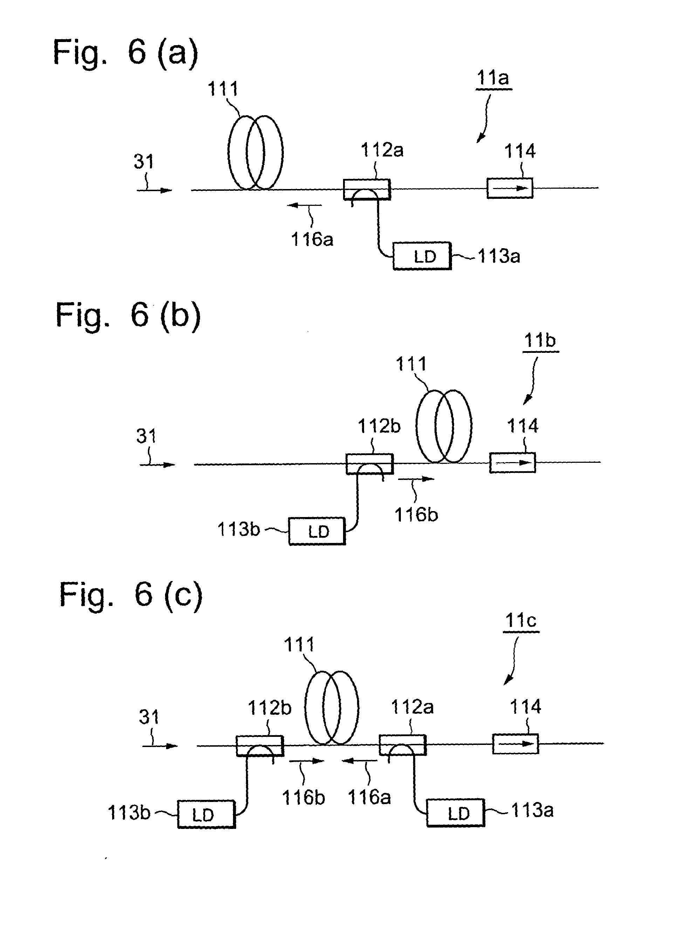

Referring to Fig. 6, there is shown a schematic of an example of the Raman amplification relay section according to the present invention: Fig. 6(a) shows a first example, Fig. 6(b) shows a second example, and Fig. 6(c) shows a third example. Hereinafter, the description will be made by referring to these drawings. Note that, however, like reference numerals refer to the same parts as in Fig. 1(b), thereby omitting the description.

A Raman amplification relay section 11a in Fig. 6(a) has the same configuration as for the Raman amplification relay section 11 in Fig. 1(b), which is of a counter-propagating pumping type emitting pumping light 116a in a reverse direction to a signal light 31. A Raman amplification relay section 11b in Fig. 6(b) is of a co-propagating pumping type emitting pumping light 116b in the same direction as for the signal light 31. A Raman amplification relay section 11c in Fig. 6(c) has both configurations of the counter-propagating pumping type emitting the pumping light 116a in the reverse direction to the signal light 31 and the co-propagating pumping type emitting the pumping light 116b in the same direction as for the signal light 31. It is possible to use any Raman amplification relay section among (a) to (c) in the above.

Also in the EDFA, any of the co-propagating pumping type, the counter-propagating pumping type, and co-propagating and counter-propagating pumping type can be used as described above.

Referring to Fig. 7, there is shown an explanatory diagram of an operation of reducing an amplified spontaneous emission (ASE) noise outside the signal wavelength range in the optical transmission system in Fig. 1. Hereinafter, the description will be made by referring to Fig. 1 to Fig. 7.

If a plurality of pumping wavelengths are used for securing gain flatness in the Raman amplification relay sections 11 to 1N, a gain occurs outside the signal wavelength range, too. This easily causes the ASE noise. Accordingly, a wavelength range of an EDFA 217 is set in such a way as to remove the ASE light by using a filter or the like (not shown). With this, the ASE noise outside the signal wavelength range can be inhibited.

Referring to Fig. 7(a), there is shown a basic block unit 30 comprising the Raman amplification relay sections 11 to 1N and the EDFA relay section 21 at a ratio of N to 1. A signal at the a point in Fig. 7(a) has just entered the basic block unit 30 and has not been affected yet by the Raman amplification relay section. A spectrum of this signal is shown in Fig. 7(b). A signal at the b point in Fig. 7(a) has just passed the N Raman amplification relay sections 11 to 1N. A spectrum of this signal is shown in Fig. 7(c). As shown, ASE noises 41 and 42 occur outside the signal wavelength range. A signal at the c point in Fig. 7(a) has just passed the EDFA relay section 21. A spectrum of this signal is shown in Fig. 7(d). By using the EDFA 217 having a wavelength range 43 as shown in Fig. 7(d) for the EDFA relay section 21, the ASE noises 41 and 42 shown in Fig. 7(c) can be removed.

Naturally the present invention is not limited to the above embodiments. For example, a thulium doped fiber amplifier (TDFA) or the like can be used instead of the EDFA.

As set forth hereinabove, according to the optical transmission system of the present invention, even if a signal level significantly deviates from a setting value in a plurality of first optical amplification relay sections with Raman amplifiers, it is possible to return the output signal level to the setting value in a second optical amplification relay section with an optical fiber amplifier (for example, an EDFA) disposed in the subsequent stage.

Therefore, according to the present invention, even if a signal level changes due to a failure or a disturbance in the first optical amplification relay sections, the signal level can be returned to the initial setting value. It is because an optical fiber amplifier (for example, an EDFA) disposed in the subsequent stage is operating with a control of output uniformity.

The Raman amplifier has a feature of decreasing peak power of a signal light in an optical fiber at a low level, thereby preventing deterioration of a signal-to-noise ratio (SN ratio) and therefore preventing the transmission deterioration caused by nonlinear optical effects. It, however, has a weakness of being susceptible to deterioration with time. On the other hand, an optical fiber amplifier has a feature of achieving a stable quality against deterioration with time. It, however, has a weakness of having trouble in keeping the peak power low, thereby easily having transmission deterioration caused by nonlinear optical effects. Therefore, with a plurality of Raman amplifiers and a single optical fiber amplifier, they make up for each other's weaknesses so as to utilize their own features. The optical transmission system according to the present invention is capable of preventing both of the quality deterioration and deterioration with time in transmissions.

To enhance these effects, it is more preferable that the ratio of the first optical amplification relay sections to the second optical amplification relay section is 5 or greater to 1. In addition, it is more preferable that the Raman amplifier has a uniform gain and the optical fiber amplifier has a uniform output signal level.

Furthermore, according to the present invention, the amplification wavelength range of the second optical amplification relay section with the optical fiber amplifier is set to a signal wavelength range, thereby effectively removing an ASE noise accumulated outside the signal wavelength range by means of the first optical amplification relay sections with the Raman amplifiers.

While the present invention has been described in connection with certain preferred embodiments, it is to be understood that the subject matter encompassed by way of this invention is not limited to those specific embodiments. On the contrary, it is intended for the subject matter of the invention to include all alternative, modification, and equivalents as can be included within the spirit and scope of the following claims.

## Claims

1. An optical transmission system comprising a plurality of optical amplification relay sections connected in series,
said plurality of optical amplification relay sections, comprising:
a plurality of first optical amplification relay sections with optical fiber Raman amplifiers; and
a single second optical amplification relay section with a rare-earth-elements-doped optical fiber amplifier in their subsequent stage.

2. An optical transmission system comprising a plurality of optical amplification relay sections connected in series,
said plurality of optical amplification relay sections, comprising:
N (N is 2 or a greater integer) first optical amplification relay sections with optical fiber Raman amplifiers; and
a single second optical amplification relay section with a rare-earth-elements-doped optical fiber amplifier in their subsequent stage.

3. An optical transmission system, as claimed in Claim 2, wherein:
said N is 3 or greater.

4. An optical transmission system, as claimed in Claim 2, wherein:
said N is 4 or greater.

5. An optical transmission system, as claimed in Claim 2, wherein:
said N is 5 or greater.

6. An optical transmission system, as claimed in one of Claims 1 to 5, wherein:
said optical transmission system comprising a plurality of units each having said plurality of first optical amplification relay sections and said single second optical amplification relay section.

7. An optical transmission system, as claimed in one of Claims 1 to 6, wherein:
said optical fiber Raman amplifier has a uniform pumping gain and said rare-earth-elements-doped optical fiber amplifier has a uniform output signal level.

8. An optical transmission system, as claimed in one of Claims 1 to 7, wherein:
said optical fiber Raman amplifier is of one of a counter-propagating pumping type, a co-propagating pumping type, and co-propagating and counter-propagating pumping type.

9. An optical transmission system, as claimed in one of Claims 1 to 8, wherein:
said second optical amplification relay section has an amplification wavelength range for removing an ASE noise, which may occur in said first optical amplification relay sections.

10. An optical transmission system, as claimed in one of Claims 1 to 9, wherein:
said rare-earth-elements-doped optical fiber amplifier is an Erbium-doped optical fiber amplifier.

11. An optical transmission system comprising a plurality of optical amplification relay sections connected in series, the optical amplification relay sections comprising:
a plurality of first optical amplification relay sections with Raman amplifiers; and
a single second optical amplification relay section with an optical fiber amplifier in a subsequent stage of the first optical amplification relay sections.

12. An optical transmission system comprising a plurality of optical amplification relay sections connected in series, the optical amplification relay sections comprising:
N (where N is 2 or a greater integer) first optical amplification relay sections with Raman amplifiers; and
a single second optical amplification relay section with an optical fiber amplifier in a subsequent stage of the first optical amplification relay sections.
